# EUROPÄISCHE PATENTSCHRIFT

(11) **EP 1 543 295 B1**
(45) Veröffentlichungstag und Bekanntmachung des Hinweises auf die Patenterteilung: **25.01.2006**
(21) Anmeldenummer: 03757774.9
(22) Anmeldetag: 02.09.2003
(51) Int. Cl.: G01C 21/32, G08G 1/0968

(54) **SENSORVORRICHTUNG FÜR EIN KRAFTFAHRZEUGSYSTEM**
SENSOR DEVICE FOR A MOTOR VEHICLE SYSTEM
DISPOSITIF DE DETECTION POUR UN SYSTEME DE VEHICULE AUTOMOBILE

(30) Priorität: 23.09.2002 DE 10244329
(43) Veröffentlichungstag der Anmeldung: 22.06.2005
(73) Patentinhaber: DaimlerChrysler AG, 70567 Stuttgart (DE)
(72) Erfinder: ALEKSIC, Mario, 78647 Trossingen (DE); BRACHT, Alexander, 73730 Esslingen (DE); ENTENMANN, Volker, 71563 Affalterbach (DE); LINKOHR, Jochen, 71404 Korb (DE); MEZGER, Klaus, 70184 Stuttgart (DE); ORTLOFF, Roland, 71332 Waiblingen (DE); SCHÜSSLER, Robert, 70597 Stuttgart (DE)
(86) Internationale Anmeldenummer: PCT/EP2003/009721
(87) Internationale Veröffentlichungsnummer: WO 2004/029552

(56) Entgegenhaltungen:
- EP-A- 0 921 509
- WO-A-01/01366
- US-A- 5 694 322
- US-A1- 2001 027 375
- US-A1- 2002 035 432

## Beschreibung

Die Erfindung betrifft eine Sensorvorrichtung für ein Kraftfahrzeugsystem. Dabei ist ein Sensor ein elektronisches Bauelement, das quantifizierbare Größen in entsprechende elektrische Signale umsetzt, womit diese Signale einer rechnergestützten Weiterverarbeitung zugeführt werden können.

Moderne Kraftfahrzeuge umfassen eine Vielzahl von Sensoren. Die Sensoren sind vielfach in Fahrzeugsystemen integriert, die den Fahrer in kritischen Situationen unterstützen, den Fahrkomfort erhöhen oder den Kraftstoffverbrauch und damit die Umweltbelastung vermindern. Ein Beispiel für ein System zur Erhöhung des Fahrkomforts ist eine radargestützte, automatische Abstandshaltung zum vorausfahrenden Fahrzeug. Ein System zur Verminderung des Kraftstoffverbrauchs ist eine situationsangepasste Gangwahl, d.h. ein verbrauchsoptimiertes automatisches Schalten.

Während solche Systeme in Standardsituationen zuverlässig funktionieren, treten in bestimmten Situationen Probleme beim Betrieb auf. So können bei der radargestützten, automatischen Abstandshaltung Schwierigkeiten z.B. in Kurven oder mit Objekten wie Brückenpfeilern auftreten, wenn lediglich das Radarsignal zur Auswertung einer Objektkonstellation vorliegt. Bei der situationsangepassten Gangwahl sind nur aktuelle Größen wie z.B. ein momentanes Drehmoment zur Ableitung einer Momentangröße der Steigung oder auch ein momentaner Lenkwinkeleinschlag zur Ableitung einer Momentangröße der Kurvenkrümmung verfügbar, eine "Vorausschau" auf zukünftige Werte solcher Größen und damit eine Abschätzung einer zukünftigen Entwicklung sind nicht möglich.

Die US 2001027375 beschreibt ein geographischen Informationsystem das Rasterkarten erzeugt für ein Fahrzeugsnavigationsystem.

Eine Möglichkeit um Fahrzeugsystemen zusätzliche Informationen bereitzustellen und so diese Systeme universeller einsetzbar zu machen ist eine Verwendung von in digitalen Straßenkarten gespeicherten geographischen Daten. Ein derartiges System legt die DE 37 00 552 A1 dar. Dabei umfasst ein fahrzeuggestütztes Navigationssystem mit einer digitalen Straßenkarte zusätzlich sicherheitsrelevante Informationen. Diese Informationen werden beim Erreichen der ihnen zugeordneten geographischen Position ausgegeben und/ oder zur Ansteuerung von Fahrzeugsystemen verwendet. Bei der Ausgabe der Informationen bzw. der Ansteuerung der Fahrzeugsysteme können auch automatisch erfasste Fahr- und Umweltdaten, wie z.B. die Fahrzeuggeschwindigkeit, berücksichtigt werden.

Die EP 1 111 336 A1 beschreibt ein Verfahren zur universellen Verwendung einer digitalen Straßenkarte, wobei in der digitalen Straßenkarte Strecken in Form von Kanten und Knoten abgespeichert sind, zur Ansteuerung von Fahrzeugsystemen. Ausgehend von der aktuellen Position des Kraftfahrzeugs werden verschiedene mögliche Routen berechnet. Hiermit wird ein "elektronischer Horizont" bereitgestellt, dessen Erstreckung z.B. von der Art einer jeweils vorausliegenden Route abhängig ist. Die den jeweiligen Routen zugeordneten geographischen Daten innerhalb des elektronischen Horizonts werden in einem Zwischenspeicher abgelegt. Dabei können die in der digitalen Straßenkarte gespeicherten geographischen Daten auch eine unterschiedliche Genauigkeit aufweisen, zur Verwendung in unterschiedlichen Fahrzeugsystemen, was durch eine entsprechende Kennzeichnung der Daten bewirkt wird. Die im Zwischenspeicher abgelegten Daten werden über einen Broadcast-Mechanismus (Aussendung über ein fahrzeuggestütztes Netzwerk) den Fahrzeugsystemen bereitgestellt. Das jeweilige Fahrzeugsystemen wird derart konfiguriert, dass es nur die von ihm benötigten Daten empfängt.

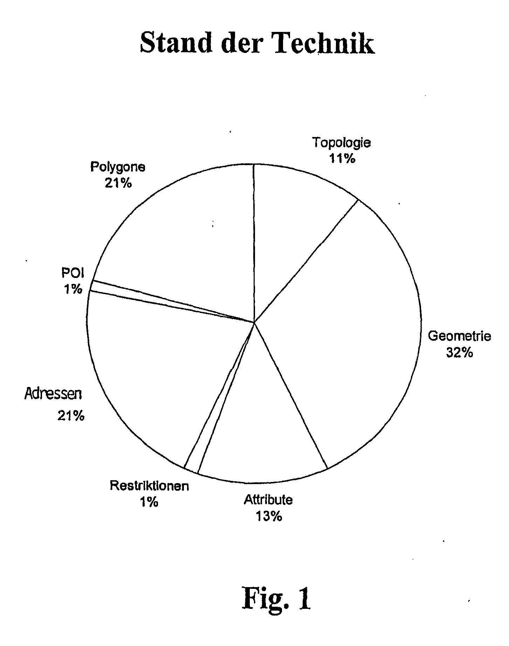

Jedoch weist der Einsatz der in einer digitale Straßenkarte gespeicherten geographischen Daten für Fahrzeugsysteme mehrere Nachteile auf. Zum einen sind digitale Straßenkarten speziell für die Navigation von Kraftfahrzeugen konstruiert und entsprechend optimiert. Vorliegend ist jedoch nicht die Navigation der Haupteinsatzzweck der digitalen Straßenkarte, sondern stattdessen die "Speicherfunktion" für geographischen Daten zur Ansteuerung von Fahrzeugsystemen. Dabei umfasst die digitale Straßenkarte eine Vielzahl von für dieses Einsatzgebiet nicht benötigten Daten. Hier sei insbesondere auf Fig. 1 verwiesen. Sollen im Kraftfahrzeug nun lediglich geographische Daten zur Ansteuerung von Fahrzeugsystemen vorgehalten werden, wird unnötigerweise teurer Speicherplatz belegt. Beispielsweise ist es nötig, die für ein derartige Datenmenge benötigten kostspieligen Mittel im Kraftfahrzeug vorzusehen, z.B. ein CD-ROM oder DVD-Laufwerk. Stattdessen wäre es möglich, die tatsächlich benötigte Datenmenge auf einem preiswerten Speicherbaustein unterzubringen. Zusätzlich ist es noch nötig, ein aufwendiges fahrzeugbasiertes Navigationssystem zur Ansteuerung der digitalen Straßenkarte im Kraftfahrzeug mitzuführen. Und dies selbst für den Fall, dass eigentlich kein derartiges Navigationssystem benötigt wird, z.B. wenn das Fahrzeug eine Zentralengestützte Navigation benutzt.

Weiterhin sind, wie beispielsweise in der EP 1 111 336 A1 dargelegt, umfangreiche und komplizierte Konfigurations-, Sende- und Empfangsoperationen zur Bereitstellung der geographischen Daten für die Fahrzeugsysteme nötig. Grund hierfür ist die "universelle" Verwendung nur einer digitalen Straßenkarte für die verschiedenen Fahrzeugsysteme. Dies erhöht zum einen den Datenverkehr auf den fahrzeuginternen Netzwerken, z.B. dem CAN ("Controlled Area Network"), sowie die Komplexität des entsprechenden Systemaufbaus. Zum anderen ist es fehleranfällig und ermöglicht z.B. keine Trennung zwischen Komfortfunktionen und Sicherheitskritischen Funktionen. Damit sind die derart bereitgestellten geographischen Daten nicht zuverlässig für sicherheitskritische Fahrzeugsysteme einsetzbar.

Der Erfindung liegt die Aufgabe zugrunde, ein Mittel anzugeben, das einem Fahrzeugsystem die benötigten geographischen Daten einfach, preiswert und stabil bereitstellt.

Diese Aufgabe wird erfindungsgemäß durch die Sensorvorrichtung mit den Merkmalen des Anspruchs 1 gelöst. Die Unteransprüche betreffen vorteilhafte Aus- und Weiterbildungen der Erfindung.

Der Hauptgedanke der Erfindung besteht darin, dass ein Speichermittel für geographische Daten vorgesehen ist, wobei die geographischen Daten zur Beschreibung einer oder mehrerer Fahrtstrecken des Kraftfahrzeuges geeignet sind, mit einer Eingabeschnittstelle zur Auswahl einer Teilmenge der im Speichermittel gespeicherten geographischen Daten, wobei die Auswahl durch die Bereitstellung zumindest eines Parameterwertes an der Eingabeschnittstelle bewirkt wird, sowie einer Ausgabeschnittstelle zur Ausgabe der den bereitgestellten Parameterwerten entsprechenden Teilmenge der geographischen Daten, wobei die ausgegebenen Daten einer weiteren Verarbeitung im Kraftfahrzeug zugeführt werden. Mit anderen Worten werden weder eine digitale Straßenkarte noch ein "navigierbarer" (zur Navigation des Kraftfahrzeugs geeigneter) Datensatz benötigt. Auch ein Navigationssystem zur Ansteuerung der digitalen Straßenkarte wird nicht benötigt.

Erfindungsgemäß ist lediglich ein Speichermittel zur Ablage von geographischen Daten vorgesehen. In diesem Speichermittel sind geographische Daten abgelegt, die zur Beschreibung wenigstens einer möglichen Fahrtstrecke des Kraftfahrzeuges geeignet sind. Dabei entspricht eine Fahrtstrecke ganz oder in Teilen einer Route von einem Start- zu einem Zielpunkt. Dieses Vorgehen bietet gleich mehrere Vorteile. So wird hiermit erstmals eine vollständige Trennung von solchen geographischen Daten, die zur Verwendung in Fahrzeugsystemen vorgesehen sind, und den zur Navigation verwendeten geographischen Daten realisiert. Dies ist ein eklatanter Vorteil beispielsweise bei sicherheitskritischen Fahrzeugsystemen.

Dieser Aspekt wird besonders vorteilhaft weitergebildet, wenn die von sicherheitskritischen Fahrzeugsystemen verwendeten geographischen Daten zertifiziert, d.h. von staatlicher Stelle bzw. anderen besonders vertrauenswürdigen Institutionen gesondert geprüft sind. Eine herkömmliche digitale Straßenkarte ist weder zertifiziert noch wäre dies aufgrund der riesigen Datenmenge auch nur annähernd zu leisten. Eine unter Sicherheitsaspekten fragwürdige Vermischung zertifizierter und unzertifizierter Daten wird wirkungsvoll verhindert durch das erfindungsgemäß isolierte Speichermittel für die zertifizierten, von sicherheitskritischen Fahrzeugsystemen verwendeten geographischen Daten.

Ein weiterer Vorteil der Trennung zwischen den zur Verwendung in Fahrzeugsystemen vorgesehen geographischen Daten und den zur Navigation verwendeten geographischen Daten ist die hiermit gewonnene Unabhängigkeit der Kraftfahrzeughersteller von den Herstellern von Navigationssystemen. Navigationssysteme unterliegen als Konsumelektronikartikel einer schnellen Produktfolge und ständigen Weiterentwicklung. Somit sind bei jeder neuen Generation von im Kraftfahrzeug verbauten Navigationssystemen erneute Anpassungsarbeiten z.B. bei Schnittstellen sowie Prüfungen und Funktionstests insbesondere der sicherheitskritischen Fahrzeugsysteme notwendig. Eine derartige Weiterentwicklung von Navigationssystemen erfolgt jedoch lediglich für die Navigationsfunktion. Denn die Bereitstellung von geographischen Daten für Fahrzeugsystemen ist ja quasi nur die "Nebenaufgabe" des Navigationssystems. Hier stellen die stets gleichbleibenden Ein- und Ausgabeschnittstellen der erfindungsgemäßen Sensorvorrichtung eine große Kosten- und Arbeitsersparnis dar.

Ein weiterer Vorteil der Erfindung betrifft besonders deren Einsatz bei Nutzfahrzeugen. Nutzfahrzeuge befahren üblicherweise nur eine oder einige wenige Routen. Es ist also gar nicht nötig, umfassende digitale Straßenkarten in einem Nutzfahrzeug mitzuführen. Auch wird von Nutzfahrzeugen zumeist kein fahrzeuggestütztes Navigationssystem verwendet, da die Fahrer die wenigen zu befahrenden Strecken zumeist gut kennen. Stattdessen werden häufig zentralengestützte Navigations- und Dispositionssysteme verwendet, z.B. "Fleetboard" von der Firma DaimlerChrysler. Durch den auch wegen des Kostendrucks im Transportgewerbe häufigen Verzicht auf ein fahrzeuggestütztes Navigationssystem können bisher von den Fahrzeugsystemen keine geographischen Daten genutzt werden. Diesem Problem hilft die Erfindung nun ab.

Insbesondere Nutzfahrzeuge verfügen auch zumeist schon über die zur Ansteuerung des Speichermittels benötigten zusätzlichen Vorrichtungen. Neben den verwendeten zentralengestützten Navigations- und Dispositionssystemen wird in naher Zukunft zusätzlich eine Ausstattung zumindest schwererer Nutzfahrzeuge mit einer Vorrichtung zur Bestimmung von Wegenutzungsgebühren verpflichtend sein. Solche Vorrichtungen umfassen bereits die zur Nutzung des erfindungsgemäßen Speichermittels benötigten Berechnungsmittel und zusätzlichen Sensoren. Diese zusätzlichen Sensoren werden insbesondere zur Positionsbestimmung verwendet, z.B. mit GPS ("Global Positioning System"). Weitere zusätzlichen Sensoren dienen zur Kontrolle und Korrektur der Positionsbestimmung, z.B. Odometer oder elektronische Kreisel. Weiterhin sind Mittel zur Kommunikation des Kraftfahrzeugs mit externen Einheiten vorgesehen, beispielsweise über GSM ("Global System for Mobile Communication) oder DSRC ("Dedicated Short-Range Communication", Kurzreichweiten-Kommunikation). Auch die eigentliche Positionsbestimmung erfolgt bereits in diesen Vorrichtungen.

In einer vorteilhaften Ausführungsform werden solche Vorrichtungen in einer einzigen Baugruppe zusammengefasst. Damit bilden zumindest einige der zusätzlichen Sensoren, Berechnungsmittel und die erfindungsgemäße Sensorvorrichtung eine kompakte, standardisierte und somit preisgünstig zu fertigende Telematikplattform. Diese umfasst neben der erfindungsgemäßen Sensorvorrichtung beispielsweise die fahrzeugseitigen Mittel eines zentralengestützten Navigations- und Dispositionssystems und/ oder die Vorrichtung zur Bestimmung von Wegenutzungsgebühren.

Einer oder mehrere derart erzeugte positionsbezogene Parameterwerte werden erfindungsgemäß an der Eingabeschnittstelle des Speichermittels zur Auswahl einer Teilmenge der im Speichermittel gespeicherten geographischen Daten bereitgestellt. Vorteilhafte Weiterbildungen ermöglichen neben der Bereitstellung der aktuellen Position des Kraftfahrzeug weitere Kombinationen von Parametern. Dies sind insbesondere Teilstrecken der aktuellen Fahrtroute, wobei die Fahrtroute z.B. von einer zentralenbasierten Navigation dem Kraftfahrzeug bereitgestellt wird, oder ein geographisches Gebiet. Ein geographisches Gebiet wird beispielsweise durch ein um die derzeitige Fahrzeugposition sich öffnenden "Trichter" gebildet, dessen Größe von der Fahrzeuggeschwindigkeit und dessen Öffnungswinkel von der Fahrzeugrichtung abhängig ist. Hier sind eine Vielzahl von Möglichkeiten vorgesehen, die insbesondere von der Art des angesteuerten Fahrzeugsystems abhängig sind. Vorteilhaft ist dabei der Anschluss der Ein- und/ oder Ausgabeschnittstelle des Speichermittels an ein fahrzeugbasiertes Datennetzwerk, z.B. CAN ("Controlled Area Network"). Dies ermöglicht eine besonders einfache Übertragung der benötigten zusätzlichen Sensorwerte und/ oder geographischen Daten.

Alternativ zur Ansteuerung des erfindungsgemäßen Sensorvorrichtung durch ein bereits im Fahrzeug vorhandenes Berechnungsmittel kann vorgesehen sein, dass der Sensorvorrichtung ein eigenes Berechnungsmittel zur Bestimmung positionsbezogener Parameterwerte zugeordnet ist, z.B. ein Fahrzeugrechner oder ein Steuergerät. Das eigene Berechnungsmittel kann beispielsweise zusätzliche Sensordaten direkt verarbeiten und so eine eigenständige Positionsbestimmung durchführen. In einer anderen Ausführungsform kann vorgesehen sein, dass das eigene Berechnungsmittel aus einer von einer zentralenbasierten Navigation bestimmten Route ein nächstes Teilstück auswählt. Hier ist eine Vielzahl unterschiedlicher Ausführungsformen möglich. Natürlich können das Berechnungsmittel und die Sensorvorrichtung dabei auch als eine bauliche Einheit ausgebildet sein. Weiterhin kann jedem Fahrzeugsystem eine eigene Sensorvorrichtung zugeordnet sein. Alternativ wird eine Sensorvorrichtung von mehreren Fahrzeugsystemen genutzt. Dabei können wiederum ein oder mehrere eigene Berechnungsmittel vorgesehen sein. Beliebige Kombinationen sind dabei möglich.

Mit Vorteil wird vorgeschlagen, die erfindungsgemäße Sensorvorrichtung als "intelligenten" Sensor auszuführen. Ein intelligenter Sensor ermöglicht eine besonders einfache Verwendung nach dem Prinzip "Plug&Play" (Einsatz ohne weitere Anpassungsarbeiten durch Selbstkonfiguration).

Die erfindungsgemäß im Speichermittel gespeicherten geographischen Daten sind keine Allzweckdaten zur Navigation, zur Ansteuerung von Fahrzeugsystemen oder für weitere Verwendungen, sondern sind speziell zur Ansteuerung eines oder mehrerer Fahrzeugsysteme vorgesehen. Damit ergibt sich eine erhebliche Verringerung des benötigten Datenumfangs aufgrund der fehlenden Notwendigkeit, dass die Daten zur Navigation geeignet sein müssen.

In einer besonders vorteilhaften Weiterbildung wird ein solches Speicherformat für die im Speichermittel gespeicherten geographischen Daten gewählt, das zugleich besonders wenig Speicherplatz benötigt und eine besonders hohe Genauigkeit aufweist. Da es jedoch nicht zur Navigation geeignet ist, wird ein derartiges Datenformat bisher für die Speicherung geographischer Daten im Kraftfahrzeug nicht verwendet. Dieses neuartige Datenformat beinhaltet im Kern eine Abkehr von der Verwendung der üblicherweise bei digitalen Straßenkarten verwendeten Darstellung der Strecken unter Verwendung von Kanten und Knoten. Insbesondere bei nicht geraden Teilstücken der Strecke, also Kurven, ist diese Darstellungsform ungenau und sehr speicheraufwendig. Der Grund liegt darin, dass gebogene Streckenstücke von Straßen üblicherweise entweder in Form von Kreisbögen oder in Form von Klothoiden (Cornuschen Spiralen) realisiert sind. Klothoiden, also ebene Kurven deren Krümmung proportional mit der Bogenlänge zunimmt, werden als Übergang zwischen Kreisbögen und geraden Teilstücken oder zwischen zwei Kreisbögen verwendet. Durch die parameterbasierte Beschreibung nicht gerader Fahrtstreckenteilstücke in Form eines Kreisbogens oder einer Klothoiden oder eines Splines wird enorm Speicherplatz gespart, da nur die entsprechenden Parameter abgelegt werden müssen. Zugleich wird die Genauigkeit der geographischen Daten signifikant erhöht, da keine "Näherungslösung" in Form einer fehleranfälligen Approximation mit Kanten und Knoten sondern stattdessen die exakte Darstellung im Speichermittel abgelegt wird. Zusätzlich wird der Zugriff auf die geographischen Daten beschleunigt und die zugeordnete Verarbeitungseinheit von Berechnungsaufgaben entlastet.

Erfindungsgemäß ist vorgesehen, dass nur eine oder einige wenige Fahrtstrecken bzw. Fahrtrouten des Kraftfahrzeug im Speichermittel abgelegt sind. Wie bereits vorstehend dargelegt, ist dies insbesondere beim Einsatz der Erfindung bei Nutzfahrzeugen auch zweckmäßig. Jedoch wird es von Zeit zu Zeit notwendig sein, neue und bisher nicht im Speichermittel abgelegte geographische Daten bereitzustellen. Dies ist natürlich dann nötig, wenn völlig neue Fahrtstrecken bzw. Fahrtrouten den Fahrzeugsystemen verfügbar gemacht werden sollen. Jedoch auch für den Fall, dass sich Änderungen an den bereits abgespeicherten Fahrtstrecken bzw. Fahrtrouten ergeben haben, z.B. durch bauliche Maßnahmen, sind geographische

Daten im Speichermittel zu ändern. Diese Änderungen werden besonders einfach bewirkt, wenn das Speichermittel wiederbeschreibbar ist. Die geographischen Daten sind mit Vorteil partiell und/ oder inkrementell und/ oder vollständig änderbar und die verschiedenen Änderungen so einfach durchführbar. Natürlich beziehen sich diese Änderungsmöglichkeiten auch auf einen in einem der Sensorvorrichtung eventuell zugeordneten eigenen Berechnungsmittel abgelegten Berechnungscode.

In einer besonders vorteilhaften Ausführungsform ist das Speichermittel als Flash-ROM ausgebildet. Damit sind Änderungen bequem durchzuführen ohne dass die Gefahr besteht dass geographische Daten versehentlich gelöscht werden. Beispielsweise wird die Änderung mittels einer mit dem Speichermittel verbundenen und über eine entsprechende Schnittstelle zugängliche Datenleitung bewirkt. In einer anderen Ausführungsform ist das Speichermittel als mobiler Speicherbaustein ausgebildet, welcher vom Fahrer des Kraftfahrzeug einfach in eine dafür vorgesehene Halterung eingesetzt und so datentechnisch zugänglich gemacht wird.

Durch den hohen Aufwand der Zertifizierung werden derartige zertifizierte geographische Daten relativ teuer in der Herstellung und damit im Erwerb sein. Somit ist es die Verwendung großer Datenmengen, z.B. einer digitalen Straßenkarte, hier wenig aussichtsreich. Dagegen wird ein solcher Mechanismus durch einen wiederbeschreibbaren Speicher in idealer Weise unterstützt. Denn es werden immer nur eine oder wenige Strecken im Speichermittel vorgehalten. Damit verursacht es nur moderate Kosten, diese stets auf dem aktuellsten Stand zu halten. Somit ist stets ein zuverlässiger Betrieb der mit geographischen Daten versorgten Fahrzeugsysteme sichergestellt.

Die von der erfindungsgemäßen Sensorvorrichtung mit geographischen Daten versorgten Fahrzeugsysteme sind im wesentlichen außerorts sinnvoll zu betreiben. Denn innerorts wird das Verkehrsgeschehen im wesentlichen von der durch Ampeln und Kreuzungen hervorgerufenen Dynamik der Kraftfahrzeuge beeinflusst und erlaubt somit keinen sinnvollen Einsatz der Fahrzeugsysteme. Deshalb werden in vorteilhafter Weise nur solche geographischen Daten im Speichermittel abgelegt, die den Außerortsbereich betreffen.

Eine Vielzahl von Fahrzeugsystemen profitiert von einer Versorgung mit geographischen Daten. Zum einen werden bereits existierende Systeme in ihrer Funktion weiter verbessert und noch universeller einsetzbar. Ein Beispiel hierfür ist die radargestützte, automatische Abstandshaltung. Durch eine vorausschauende Objektzuordnung unter Verwendung der im Speichermittel gespeicherten geographischen Daten ist bei der Auswertung einer Objektkonstellation zusätzlich zum Radarsignal weitere Information verfügbar. Dies erhöht enorm die Erkennungssicherheit in schwierigen Situationen wie z.B. in Kurven oder bei Objekten wie Brückenpfeilern. Bei der situationsangepassten Gangwahl sind zusätzlich zu aktuellen Größen wie z.B. ein momentanes Drehmoment zur Ableitung einer Momentangröße der Steigung oder auch ein momentaner Lenkwinkeleinschlag zur Ableitung einer Momentangröße der Kurvenkrümmung durch die geographischen Daten nun auch als Vorausschau zukünftige Werte solcher Größen verfügbar. Somit sind Situationen vom Fahrzeugsystem wesentlich besser einzuschätzen. Beispielsweise ist es jetzt möglich zu prüfen ob ein Steigungs-Grenzwert nur kurzfristig überschritten wurde oder ob tatsächlich eine längere Steigungsstrecke voraus liegt.

Zum anderen ermöglicht die Versorgung mit den geographischen Daten der erfindungsgemäßen Sensorvorrichtung die Konstruktion völlig neuartiger Systeme. Besonders hervorzuheben ist hier eine vorausschauende Kurvenwarnung. Gerade bei Nutzfahrzeugen ereignen sich immer wieder sehr folgenschwere Umkipp-Unfälle, und zwar gerade bei erfahrenen Fahrern auf häufig gefahrenen Strecken. Die erfindungsgemäße Sensorvorrichtung ist in idealer Weise geeignet die Zahl solcher Unfälle signifikant zu senken. Weitere Beispiele für neuartige Fahrzeugsysteme sind ein Kurvenlicht, d.h. eine vorausschauende Auslenkung des Scheinwerferlichts in Abhängigkeit von der Straßenkrümmung; eine Warnung vor vorausliegend für das Kraftfahrzeug nicht passierbaren Stellen wie z.B. Brücken oder Engstellen; ein situationsangepasstes Warn- und Informationsmanagement um den Fahrer nicht mit Reizen zu überlasten; und eine prädikative Diagnose mit realen, ortsbezogenen Belastungskollektiven.

Der Stand der Technik bezüglich der Speicherung geographischer Daten sowie bevorzugte Ausführungsformen der Erfindung werden nun anhand einer Zeichnung näher erläutert.

Dabei zeigen:
- Fig. 1: Speicherbedarf für einzelne Datenarten bei einer herkömmlichen digitalen Straßenkarte,
- Fig. 2 a) und b): Speicherbedarf für einzelne Gebietsarten bei einer herkömmlichen digitalen Straßenkarte,
- Fig. 3 a) bis c): schematisch jeweils bevorzugte Ausführungsformen der Erfindung.

In Fig. 1 ist der Speicherbedarf für einzelne Datenarten bei einer herkömmlichen digitalen Straßenkarte als Tortendiagramm visualisiert. Speziell wird hier der Speicherbedarf einer digitalen Straßenkarte in Form einer CD-ROM für Deutschland der Firma NavTech dargestellt. Im Folgenden werden die nach dem Stand der Technik gespeicherten Datenarten kurz erläutert.

Adressen sind die als Start- und Zielpunkte bei der Navigation genutzten geographischen Daten, z.B. Straßennamen und Hausnummern. Restriktionen bezieht sich auf nicht erlaubte Übergangsmanöver an Kreuzungspunkten, z.B. auf Abbiegeverbote. Attribute sind zugeordnete Daten die ergänzend Informationen bereitstellen, z.B. eine Spuranzahl einer Strecke. Geometrie bezieht sich auf die geographische Repräsentation der Strecke durch Kanten und Knoten. Topologie benennt die logische Verknüpfung von Strecken und Knoten untereinander. Polygone beziehen sich auf zu visualisierende Daten bei der Navigation, z.B. die Grenzen von Waldgebieten oder Städten. POI bezieht sich auf interessante Punkte die als Start-, Ziel- oder Zwischenzielpunkte bei der Navigation genutzt werden können, z.B. Sehenswürdigkeiten. Aus Fig. 1 ist klar abzulesen, dass allein beim Verzicht auf die nicht für die Ansteuerung von Fahrzeugsystemen sondern nur zur Navigation benötigten Datenarten "Adressen" und "Polygone" bereits zweiundvierzig Prozent weniger Speicherplatz benötigt wird.

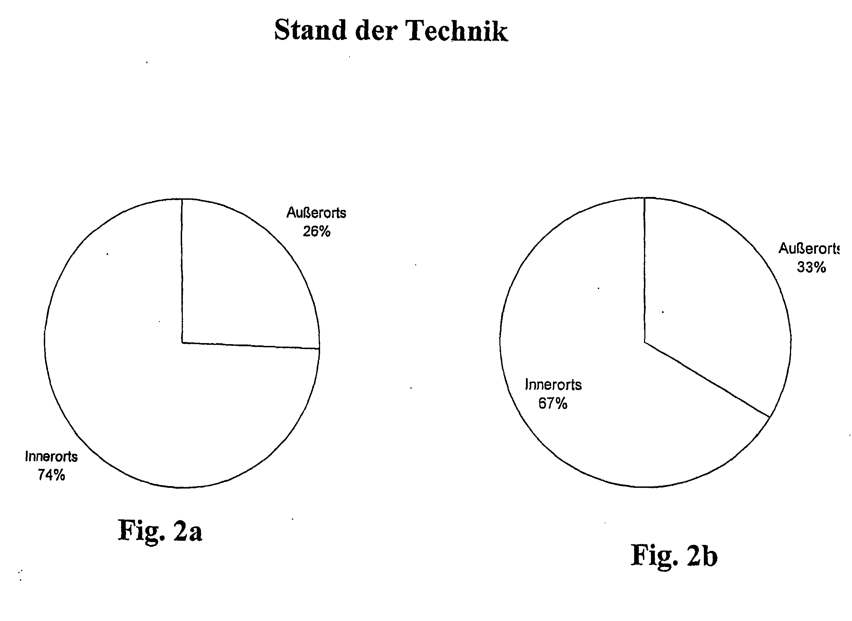

In Fig. 2 a) und b) ist der Speicherbedarf für einzelne Gebietsarten bei der selben herkömmlichen digitalen Straßenkarte wie in Fig. 1 als Tortendiagramm visualisiert. Dabei wird jeweils zwischen den Gebieten "Außerorts", d.h. außerhalb von Stadt- oder Dorfgebieten, und "Innerorts", d.h. innerhalb solcher Gebiete, unterschieden. Fig. 2a) zeigt dabei die auf das jeweilige Gebiet entfallende Anzahl Kanten, Fig. 2b) die auf das jeweilige Gebiet entfallende Anzahl Knoten. Aus Fig. 2a) und 2b) ist deutlich abzulesen, dass allein beim Verzicht auf geographische Daten über die nicht für den sinnvollen Betrieb der meisten Fahrzeugsysteme geeignete Gebietsart "Innerorts" zwischen siebenundsechzig und vierundsiebzig Prozent weniger Speicherplatz benötigt wird.

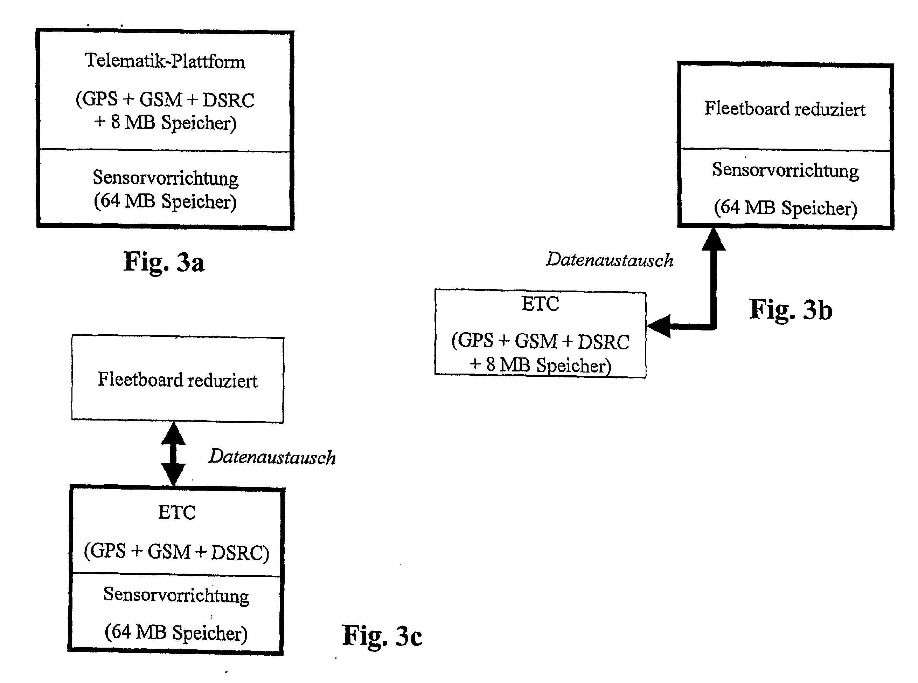

Fig. 3 a) bis c) zeigen jeweils schematisch bevorzugte Ausführungsformen der Erfindung. In Fig. 3a) ist eine Telematikplattform skizziert. Die Telematikplattform fasst verschiedene Vorrichtungen und Berechnungsmittel in einer einzigen kompakten Baugruppe zusammen. Hier sind ein zusätzlicher Sensor zur Positionsbestimmung GPS, die erfindungsgemäße Sensorvorrichtung umfassend ein Speichermittel von 64 MB, zusätzliche Speichermittel von 8 MB zum Zwischenspeichern von Berechnungen, Mittel zur Kommunikation des Kraftfahrzeugs mit externen Einheiten GSM und außerdem zur Kurzreichweiten-Kommunikation DSRC umfasst. Diese Telematikplattform ist sehr vielseitig verwendbar. So erfolgt hier die eigentliche Positionsbestimmung des Kraftfahrzeugs. Damit stellt die Telematikplattform die fahrzeugseitigen Mittel eines zentralengestützten Navigations- und Dispositionssystems und zugleich eine Vorrichtung zur Bestimmung von Wegenutzungsgebühren dar. Daneben stellt sie erfindungsgemäß geographische Daten für Fahrzeugsysteme bereit.

In Fig. 3b) ist die erfindungsgemäße Sensorvorrichtung umfassend ein Speichermittel von 64 MB zusammen mit den fahrzeugseitigen Mitteln eines zentralengestützten Navigations- und Dispositionssystems in einer Einheit "Fleetboard reduziert" zusammengefasst. Diese Einheit fasst die fahrzeugseitigen Mittel eines zentralengestützten Navigations- und Dispositionssystems zusammen und ist in der Lage, eigene Berechnungen durchzuführen. Sie umfasst jedoch keine zusätzlichen Sensoren, z.B. zur Positionsbestimmung. Diese zusätzlichen Sensoren sind von einer separaten Einheit zur Bestimmung von Wegenutzungsgebühren ETC umfasst. Die Einheit ETC umfasst mithin neben eigenen Berechnungsmitteln einen zusätzlichen Sensor zur Positionsbestimmung GPS, zusätzliche Speichermittel von 8 MB zum Zwischenspeichern von Berechnungen, Mittel zur Kommunikation des Kraftfahrzeugs mit externen Einheiten GSM und außerdem zur Kurzreichweiten-Kommunikation DSRC. Die Einheit ETC stellt neben ihrer Hauptaufgabe, der eigenständigen Bestimmung von Wegenutzungsgebühren, als "Nebenprodukt" noch der Einheit "Fleetboard reduziert" Daten von zusätzlichen Sensoren über einen Datenaustausch bereit. Die Einheit "Fleetboard reduziert" stellt erfindungsgemäß geographische Daten für Fahrzeugsysteme bereit.

In Fig. 3c) ist die erfindungsgemäße Sensorvorrichtung umfassend ein Speichermittel von 64 MB zusammen mit einer Einheit zur Bestimmung von Wegenutzungsgebühren in einer Einheit ETC zusammengefasst. Die Einheit ETC umfasst also neben der erfindungsgemäße Sensorvorrichtung und eigenen Berechnungsmitteln einen zusätzlichen Sensor zur Positionsbestimmung GPS, zusätzliche Speichermittel von 8 MB zum Zwischenspeichern von Berechnungen, Mittel zur Kommunikation des Kraftfahrzeugs mit externen Einheiten GSM und zusätzlich zur Kurzreichweiten-Kommunikation DSRC umfasst. Die Einheit ETC hat die Hauptaufgabe, die eigenständige Bestimmung von Wegenutzungsgebühren durchzuführen. Die Einheit ETC tauscht mit der Einheit "Fleetboard reduziert" Daten aus. Z.B. empfängt die Einheit ETC eine von einer zentralenbasierten Navigation durch die Einheit "Fleetboard reduziert" bereitgestellte Route. Hier stellt die Einheit ETC erfindungsgemäß geographische Daten für Fahrzeugsysteme bereit.

## Patentansprüche

1. Sensorvorrichtung für ein Kraftfahrzeugsystem, umfassend
- ein Speichermittel für geographische Daten zur Ansteuerung eines oder mehrerer Fahrzeugsysteme, wobei die geographischen Daten, als nicht-navigierbarer Datensatz, zur Beschreibung wenigstens einer möglichen Fahrtstrecke des Kraftfahrzeuges geeignet sind,
- eine Eingabeschnittstelle zur Auswahl einer Teilmenge der im Speichermittel gespeicherten geographischen Daten, wobei die Auswahl durch die Bereitstellung zumindest eines positionsbezogenen Parameterwertes an der Eingabeschnittstelle bewirkt wird,
- eine Ausgabeschnittstelle zur Ausgabe der den bereitgestellten Parameterwerten entsprechenden Teilmenge der geographischen Daten, wobei die ausgegebenen Daten einer weiteren Verarbeitung im Kraftfahrzeugsystem zugeführt werden.

2. Sensorvorrichtung nach Anspruch 1,
**dadurch gekennzeichnet,**
**dass** das Speichermittel wiederbeschreibbar ist.

3. Sensorvorrichtung nach Anspruch 2,
**dadurch gekennzeichnet,**
**dass** das Speichermittel als Flash-ROM ausgebildet ist.

4. Sensorvorrichtung nach einem der Ansprüche 1 bis 3,
**dadurch gekennzeichnet,**
**dass** die Ein- und/ oder Ausgabeschnittstelle mit einem fahrzeugbasierten Datennetzwerk verbunden sind.

5. Sensorvorrichtung nach einem der Ansprüche 1 bis 4,
**dadurch gekennzeichnet,**
**dass** die geographischen Daten partiell und/ oder inkrementell und/ oder vollständig änderbar sind.

6. Sensorvorrichtung nach Anspruch 5,
**dadurch gekennzeichnet,**
**dass** die Änderung mittels einer mit dem Speichermittel verbundenen Datenleitung bewirkt wird.

7. Sensorvorrichtung nach einem der Ansprüche 1 bis 6,
**dadurch gekennzeichnet,**
**dass** als Parameterwert an der Eingabeschnittstelle eine geographische Position des Kraftfahrzeuges und/ oder ein darauf bezogenes geographisches Gebiet und/ oder ein darauf bezogener Routenabschnitt bereitgestellt wird.

8. Sensorvorrichtung nach einem der Ansprüche 1 bis 7,
**dadurch gekennzeichnet,**
**dass** eine datentechnische Verbindung mit einer fahrzeugbasierten Telematikplattform vorgesehen ist.

9. Sensorvorrichtung nach einem der Ansprüche 1 bis 8,
**dadurch gekennzeichnet,**
**dass** eine datentechnische Verbindung mit einer fahrzeugbasierten Vorrichtung zur Bestimmung von Wegenutzungsgebühren vorgesehen ist.

10. Sensorvorrichtung nach einem der Ansprüche 1 bis 9,
**dadurch gekennzeichnet,**
**dass** eine datentechnische Verbindung mit einem Navigationssystem vorgesehen ist.

11. Sensorvorrichtung nach Anspruch 10,
**dadurch gekennzeichnet,**
**dass** das Navigationssystem zentralenbasiert ist.

12. Sensorvorrichtung nach einem der Ansprüche 1 bis 11,
**dadurch gekennzeichnet,**
**dass** die geographischen Daten zertifiziert sind.

13. Sensorvorrichtung nach einem der Ansprüche 1 bis 12,
**dadurch gekennzeichnet,**
**dass** ein nicht gerades Fahrtstreckenteilstück parameterbasiert in Form eines Kreisbogens oder einer Klothoiden oder eines Splines beschrieben wird.

14. Sensorvorrichtung nach einem der Ansprüche 1 bis 13,
**dadurch gekennzeichnet,**
**dass** die geographischen Daten für eine oder einige wenige Fahrtrouten des Kraftfahrzeuges nutzbar sind.

15. Sensorvorrichtung nach einem der Ansprüche 1 bis 14,
**dadurch gekennzeichnet,**
**dass** das Kraftfahrzeug ein Nutzfahrzeug ist.

16. Sensorvorrichtung nach einem der Ansprüche 1 bis 15,
**dadurch gekennzeichnet,**
**dass** die Sensorvorrichtung als intelligenter Sensor ausgebildet ist.

17. Sensorvorrichtung nach einem der Ansprüche 1 bis 16,
**dadurch gekennzeichnet,**
**dass** die geographischen Daten nur Außerortsstraßen betreffen.

## Claims

1. Sensor device for a motor vehicle system, comprising
- a memory means for geographical data for activating one or more vehicle systems, which geographical data is provided as a non-navigable data set suitable for describing at least one possible journey route of the motor vehicle,
- an input interface for selecting a part-quantity of the geographical data stored in the memory means, the selection being effected by entering at least one position-related parameter value at the input interface,
- an output interface for outputting the part-quantity of geographical data corresponding to the supplied parameter values, the output data being transmitted onward for further processing in the vehicle system.

2. Sensor device as claimed in claim 1,
**characterised in that**
the memory means is re-writeable.

3. Sensors device as claimed in claim 2,
**characterised in that**
the memory means is provided in the form of a flash-ROM.

4. Sensor device as claimed in one of claims 1 to 3,
**characterised in that**
the input and/ or output interface is or are connected to a vehicle-based data network.

5. Sensor device as claimed in one of claims 1 to 4,
**characterised in that**
the geographical data can be partially and/ or incrementally and/ or completely changed.

6. Sensor device as claimed in claim 5,
**characterised in that**
the change is effected by means of a data cable connected to the memory means.

7. Sensor device as claimed in one of claims 1 to 6,
**characterised in that**
a geographical position of the motor vehicle and/ or a geographical region relating to it and/ or a route portion relating to it is entered as a parameter value at the input interface.

8. Sensor device as claimed in one of claims 1 to 7,
**characterised in that**
a data connection to a vehicle-based telematics platform is provided.

9. Sensor device as claimed in one of claims 1 to 8,
**characterised in that**
a data connection to a vehicle-based device for determining road toll charges is provided.

10. Sensor device as claimed in one of claims 1 to 9,
**characterised in that**
a data connection to a navigation system is provided.

11. Sensor device as claimed in claim 10,
**characterised in that**
the navigation system is centrally based.

12. Sensor device as claimed in one of claims 1 to 11,
**characterised in that**
the geographical data is certified.

13. Sensor device as claimed in one of claims 1 to 12,
**characterised in that**
a non-straight journey route part-piece is described in the form of an arc or a clothoid or a spline on the basis of parameters.

14. Sensor device as claimed in one of claims 1 to 13,
**characterised in that**
the geographical data may be used for one or just a few journey routes of the motor vehicle.

15. Sensor device as claimed in one of claims 1 to 14,
**characterised in that**
the motor vehicle is a utility vehicle.

16. Sensor device as claimed in one of claims 1 to 15,
**characterised in that**
the sensor device is provided in the form of an intelligent sensor.

17. Sensor device as claimed in one of claims 1 to 16,
**characterised in that**
the geographical data relates to only roads outside of locations.

## Revendications

1. Dispositif de détection pour un système de véhicule automobile, comprenant :
- un moyen de stockage pour des données géographiques pour l'activation d'un ou de plusieurs systèmes de véhicule, les données géographiques étant appropriées en tant qu'ensemble de données non navigable pour la description d'au moins un trajet possible du véhicule automobile,
- une interface d'entrée pour la sélection d'une quantité partielle des données géographiques mémorisées dans le moyen de stockage, la sélection étant réalisée par la mise à disposition d'au moins une valeur de paramètre spécifique à la position sur l'interface d'entrée,
- une interface de sortie pour la sortie de la quantité partielle, correspondant aux valeurs de paramètre mises à disposition, des données géographiques, les données sorties étant amenées à un autre traitement dans le système de véhicule automobile.

2. Dispositif de détection selon la revendication 1,
**caractérisé en ce que**
le moyen de stockage est réinscriptible.

3. Dispositif de détection selon la revendication 2,
**caractérisé en ce que**
le moyen de stockage est réalisé sous la forme d'une Flash-ROM.

4. Dispositif de détection selon l'une quelconque des revendications 1 à 3,
**caractérisé en ce que**
l'interface d'entrée et/ou l'interface de sortie sont reliées à un réseau de données basé sur le véhicule.

5. Dispositif de détection selon l'une quelconque des revendications 1 à 4,
**caractérisé en ce que**
les données géographiques sont modifiables de façon partielle et/ou incrémentielle et/ou complète.

6. Dispositif de détection selon la revendication 5,
**caractérisé en ce que**
la modification est effectuée au moyen d'une ligne de données reliée au moyen de stockage.

7. Dispositif de détection selon l'une quelconque des revendications 1 à 6,
**caractérisé en ce que**
comme valeur de paramètre sur l'interface d'entrée, on met à disposition une position géographique du véhicule automobile et/ou une zone géographique spécifique à celle-ci et/ou un tronçon de route spécifique à celle-ci.

8. Dispositif de détection selon l'une quelconque des revendications 1 à 7,
**caractérisé en ce que**
une liaison informatique est prévue avec une plate-forme de télématique basée sur le véhicule.

9. Dispositif de détection selon l'une quelconque des revendications 1 à 8,
**caractérisé en ce que**
une liaison informatique est prévue avec un dispositif basé sur le véhicule pour la détermination de taxes d'utilisation de chemins.

10. Dispositif de détection selon l'une quelconque des revendications 1 à 9,
**caractérisé en ce que**
une liaison informatique est prévue avec un système de navigation.

11. Dispositif de détection selon la revendication 10,
**caractérisé en ce que**
le système de navigation est basé sur une centrale.

12. Dispositif de détection selon l'une quelconque des revendications 1 à 11,
**caractérisé en ce que**
les données géographiques sont certifiées.

13. Dispositif de détection selon l'une quelconque des revendications 1 à 12,
**caractérisé en ce que**
un tronçon de trajet non droit est décrit sur la base de paramètres sous la forme d'un arc de cercle ou d'une clothoide ou d'un spline.

14. Dispositif de détection selon l'une quelconque des revendications 1 à 13
**caractérisé en ce que**
les données géographiques peuvent être utilisées pour un ou quelques itinéraires routiers rares du véhicule automobile.

15. Dispositif de détection selon l'une quelconque des revendications 1 à 14
**caractérisé en ce que**
le véhicule automobile est un véhicule utilitaire.

16. Dispositif de détection selon l'une quelconque des revendications 1 à 15,
**caractérisé en ce que**
le dispositif de détection est conçu comme un détecteur intelligent.

17. Dispositif de détection selon l'une quelconque des revendications 1 à 16,
**caractérisé en ce que**
les données géographiques concernent seulement des routes situées à l'extérieur de localités.
